(19) Europäisches Patentamt
European Patent Office
Office européen des brevets

(11) **EP 1 476 406 B1**

(12) **EUROPÄISCHE PATENTSCHRIFT**

(45) Veröffentlichungstag und Bekanntmachung des Hinweises auf die Patenterteilung:
**22.06.2005 Patentblatt 2005/25**

(21) Anmeldenummer: **03739382.4**

(22) Anmeldetag: **04.02.2003**

(51) Int Cl.[7]: **C04B 24/28**, C08G 18/02, C08G 18/83, C08G 18/28, C09D 175/04, B41M 1/12, C09D 5/44, C09D 179/00, C25D 13/00, C08G 18/79, C08L 79/00, C08L 101/08, C09D 201/00, C09J 179/00, C09J 201/00

(86) Internationale Anmeldenummer:
**PCT/EP2003/001055**

(87) Internationale Veröffentlichungsnummer:
**WO 2003/068703 (21.08.2003 Gazette 2003/34)**

(54) **WäSSRIGE DISPERSIONEN, AUFGEBAUT AUS POLYCARBODIIMIDEN**
AQUEOUS DISPERSIONS CONSISTING OF POLYCARBODIIMIDES
DISPERSIONS AQUEUSES CONSTITUEES DE POLYCARBODIIMIDES

(84) Benannte Vertragsstaaten:
**AT BE BG CH CY CZ DE DK EE ES FI FR GB GR HU IE IT LI LU MC NL PT SE SI SK TR**

(30) Priorität: **13.02.2002 DE 10206112**

(43) Veröffentlichungstag der Anmeldung:
**17.11.2004 Patentblatt 2004/47**

(73) Patentinhaber: **BASF AKTIENGESELLSCHAFT**
**67056 Ludwigshafen (DE)**

(72) Erfinder:
- **LICHT, Ulrike**
  **68309 Mannheim (DE)**
- **HÄBERLE, Karl**
  **67346 Speyer (DE)**

(56) Entgegenhaltungen:
**EP-A- 0 628 582**
**US-A- 5 807 431**
**US-A1- 2001 011 114**

- **PATENT ABSTRACTS OF JAPAN vol. 2000, no. 04, 31. August 2000 (2000-08-31) & JP 2000 001635 A (DAINIPPON PRINTING CO LTD;JSR CORP), 7. Januar 2000 (2000-01-07)**
- **PATENT ABSTRACTS OF JAPAN vol. 1998, no. 08, 30. Juni 1998 (1998-06-30) & JP 10 060272 A (NIPPON POLYURETHANE IND CO LTD), 3. März 1998 (1998-03-03)**
- **PATENT ABSTRACTS OF JAPAN vol. 1998, no. 06, 30. April 1998 (1998-04-30) & JP 10 036668 A (JAPAN SYNTHETIC RUBBER CO LTD), 10. Februar 1998 (1998-02-10)**

EP 1 476 406 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die vorliegende Erfindung betrifft wässrige Dispersionen, aufgebaut aus Polycarbodiimiden, die im wesentlichen keine Carboxylgruppen tragen, wobei sich die Polycarbodiimide dadurch auszeichnen, daß diese

I erhalten werden aus Polyisocyanaten der allgemeinen Formel I

$$OCN\text{-}(R^c\text{-}N{=}C{=}N)_n\text{-}R^c\text{-}NCO \qquad (I)$$

in der $R^c$ für einen zweiwertigen, ggf. Harnstoff-, Urethan-, Ester- und/oder Ethergruppen aufweisenden Kohlenwasserstoffrest, wie er durch Entfernung der Isocyanatgruppen aus einem einfachen organischen Isocyanat oder einem Urethangruppen und ggf. Ether- oder Estergruppen aufweisenden Präpolymer, das endständige Isocyanatgruppen trägt, erhalten wird, wobei bei Vorliegen von mehreren Resten $R^c$ im gleichen Molekül gleichzeitig auch unterschiedliche, der genannten Definition entsprechende Reste $R^c$ vorliegen können und n für von 1 bis 20 steht,

II oder daß es sich bei den Polycarbodiimiden um solche der allgemeinen Formel (II) handelt

$$R^d\text{-}\ (R^c\text{-}N{=}C{=}N\text{-}R^c)_n\text{-}R^d \qquad (II)$$

mit

n: einer Zahl von 1 bis 20

$R^c$: wie bei der allgemeinen Formel (I) definiert,

$R^d$: $-NH_2$

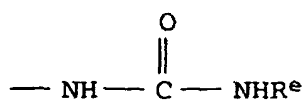

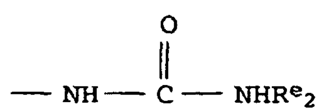

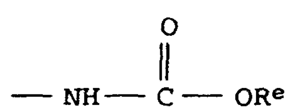

$-B{=}C{=}N\text{-}R^e$

und $R^e$ unabhängig voneinander $C_1$- bis $C_{20}$-Alkyl bzw. Alkenyl, $C_5$- bis $C_{12}$-Cycloalkyl, $C_6$- bis $C_{20}$-Aryl oder $C_7$- bis $C_{20}$-Aralkyl bedeutet, wobei 1 bis 4 Wasserstoffatome der Reste $R^e$ durch gegenüber Carbodiimidgruppen inerten Substituenten substituiert sein können und wobei die Reste $R^e$ keine hydrophilen Gruppen enthalten sollen, welche eine Wasserdispergierbarkeit bewirken können
und erhältlich sind durch ein Verfahren, dadurch gekennzeichnet, daß zunächst aus einem geeigneten Diisocyanat durch Erhitzen unter Abspaltung von Kohlendioxid ein Polycarbodiimid hergestellt wird, dieses anschließend bis zu einer dünnflüssigen Schmelze erhitzt wird und danach mit Hilfe von Emulgatoren in Wasser emulgiert wird.

Weiterhin betrifft die vorliegende Erfindung ein Verfahren zur Herstellung der erfindungsgemäßen wässrigen Dispersionen, deren Verwendung als Bestandteil von Bindemitteln in Klebstoffen, Lakken, Anstrichen, Papierstreichmassen oder in Faservliesen sowie Gegenstände aus Holz, Metall, Textil, Leder oder Kunststoff, die mit der erfindungsgemäßen wässrigen Dispersion behandelt sind.

Carbodiimid-Gruppen reagieren mit Carbonsäuren zu einer N-Acylharnstoffverbindung und sind daher als Vernetzer für solche Polymere gut geeignet, die Carbonsäure-Gruppen aufweisen. Aus diesem Grund werden Polycarbodiimide u.a. als Vernetzer von carboxylathaltigen Latices eingesetzt (US-A 4 419 294; US-A 4 820 863).

Aus der US-A 4 977 219 und der US-A 5 117 059 sind Mischungen einer wässrigen Dispersion eines Carbodiimides und einer wässrigen Dispersion eines Emulsions-Polymeren mit Carboxylat-Gruppen bekannt, wobei die erstgenannte Dispersion mit Hilfe üblicher oberflächenaktiver Substanzen stabilisiert wird.

Die US-A 5 574 083 betrifft eine Mischung einer wässrigen Dispersion von Carbodiimiden, wobei die Dispersion durch hydrophile Polyalkylenoxid-Reste, welche die Carbodiimide tragen, stabilisiert wird. Diese Dispersionen werden mit wässrigen Dispersionen eines Emulsions-Polymeren mit Carboxylat-Gruppen abgemischt.

Aus der EP-A 686626 ist bekannt, wasserlösliche Carbodiimide als Vernetzer der wässrigen Phase von Emulsionspolymerisaten zuzusetzen. Ein Nachteil dieser Verfahrensweise ist, daß die Carbodiimide durch entsprechende Umsetzung beispielsweise mit ionischen Verbindungen zunächst in eine wasserlösliche Form gebracht werden müssen. Weiterhin haben hydrophile Polycarbodiimide den Nachteil, daß ihre Lagerstabilität unzureichend ist und daß sie den mit ihnen vernetzten Filmen eine permanente Hydrophilie verleihen, welche mit einer unerwünschten geringen Wasserfestigkeit einhergeht.

Auf der anderen Seite sind hydrophobe Polycarbodiimide nicht als langzeitstabile Emulsionen oder Dispersionen erhältlich, sondern müssen unter Verwendung von Lösungsmitteln erst in die zu vernetzende Dispersion eineмulgiert werden, was für den Anwender einen zusätzlichen aufwendigen Schritt bedeutet.

Auch in US 2001/011114, US 5807431, EP 628582, JP 2000001635, JP 10060272, JP 10036668 werden Carbodiimide als Vernetzer beschrieben. Wäßrige Dispersionen von hydrophoben Carbodiimiden sind nicht erwähnt.

Der vorliegenden Erfindung lag daher die Aufgabe zugrunde, den geschilderten Nachteilen abzuhelfen und neue wässrige Dispersionen zu entwickeln, welche Polycarbodiimide enthalten, wobei die wässrigen Dispersionen auch über Monate hinweg ohne Verlust der Vernetzerwirkung haltbar sind und zu wasserfesten, vernetzten Filmen verarbeitet werden können.

Demgemäß wurden die eingangs definierten wässrigen Dispersionen sowie ein Verfahren zu deren Herstellung gefunden. Weiterhin erstreckt sich die vorliegende Erfindung auch auf die Verwendung der wässrigen Dispersionen als Bestandteil von Bindemitteln in Klebstoffen, Lacken, Anstrichen, Papierstreichmassen oder in Faservliesen sowie auf Gegenstände aus Holz, Metall, Textil, Leder oder Kunststoff, die mit solchen wässrigen Dispersionen behandelt sind.

Die erfindungsgemäßen wässrigen Dispersionen können aufgebaut sein aus Polycarbodiimiden, die im wesentlichen keine Carboxylgruppen tragen, wobei sich die Polycarbodiimide u.a. dadurch auszeichnen, daß diese erhalten werden aus Polyisocyanaten der allgemeinen Formel I

$$OCN\text{-}(R^c\text{-}N{=}C{=}N)_n\text{-}R^c\text{-}NCO \qquad (I)$$

in der $R^c$ für einen zweiwertigen, ggf. Harnstoff-, Urethan-, Ester- und/oder Ethergruppen aufweisenden Kohlenwasserstoffrest, wie er durch Entfernung der Isocyanatgruppen aus einem einfachen organischen Isocyanat oder einem Urethangruppen und ggf. Ether- oder Estergruppen aufweisenden Präpolymer, das endständige Isocyanatgruppen trägt, erhalten wird, wobei bei Vorliegen von mehreren Resten $R^c$ im gleichen Molekül gleichzeitig auch unterschiedliche, der genannten Definition entsprechende Reste $R^c$ vorliegen können und n für von 1 bis 20 steht.

Vorzugsweise werden die Polycarbodiimide aus solchen Polyisocyanaten der allgemeinen Formel I erhalten, bei denen n für eine Zahl von 2 bis 10 steht und $R^c$ einen zweiwertigen, 2 bis 50 C-Atome aufweisenden Kohlenwasserstoffrest bedeutet. Besonders bevorzugt steht $R^c$ für einen zweiwertigen, 4 bis 20 C-Atome aufweisenden Kohlenwasserstoffrest ohne weitere funktionelle Gruppen, wie zum Beispiel Harnstoff-, Urethan-, Ester- oder Ethergruppen. Ganz besonders bevorzugt sind dabei solche Polycarbodiimide, welche sich von Polyisocyanaten der allgemeinen Formel I ableiten, bei denen $R^c$ für eine Gruppe der Formel (I') 

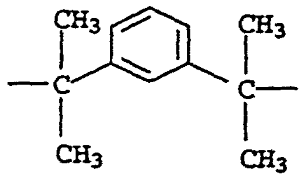

(I')

steht (Tetramethylxylylengruppe) .

Bevorzugt leiten sich die Reste $R^c$ in der allgemeinen Formel I durch Abstraktion der Isocyanatgruppen von Monomeren ab, bei denen es sich um Diisocyanate handelt, die üblicherweise in der Polyurethanchemie eingesetzt werden.

Allgemein betrachtet sind Carbodiimid-Gruppen in einfacher Weise aus zwei Isocyanatgruppen unter Abspaltung von Kohlendioxid erhältlich:

$$-R-N=C=O + O=C=N-R$$

$$\rightarrow -R-N=C=N-R- + CO_2$$

Ausgehend von Diisocyanaten sind so oligomere Verbindungen mit mehreren Carbodiimidgruppen und gegebenenfalls Isocyanatgruppen, insbesondere endständigen Isocyanatgruppen, erhältlich.

Die noch vorhandenen Isocyanatgruppen können z.B. mit Alkoholen, Thiolen, primären oder sekundären Aminen weiter umgesetzt werden, unter Bildung von Urethan, Thiourethan oder Harnstoffgruppen. Bevorzugt enthalten die Alkohole, Thiole, primären und sekundären Amine außer Hydroxylgruppen, Thiolgruppen und primären bzw. sekundären Aminogruppen keine weiteren funktionellen Gruppen. Die Carbodiimide können daher Isocyanatgruppen und deren vorstehende Umsetzungsprodukte enthalten. ,

Bevorzugt sind Polycarbodiimide, die unter Kohlendioxidabspaltung aus Polyisocyanaten, insbesondere Diisocyanaten erhältlich sind.

Die erfindungsgemäß einzusetzenden Polycarbodiimide werden dabei vorzugsweise in der Weise hergestellt, dass man Polyisocyanate der allgemeinen Formel I bei Temperaturen von 50 bis 200°C, insbesondere von 100 bis 190°C unter Kohlendioxidentwicklung kondensiert.

Als Diisocyanate in Betracht kommen vorzugsweise Diisocyanate $X(NCO)_2$, wobei X für einen aliphatischen Kohlenwasserstoffrest mit 4 bis 12 Kohlenstoffatomen, einen cycloaliphatischen oder aromatischen Kohlenwasserstoffrest mit 6 bis 15 Kohlenstoffatomen oder einen araliphatischen Kohlenwasserstoffrest mit 7 bis 15 Kohlenstoffatomen steht. Beispiele derartiger Diisocyanate sind Tetramethylendiisocyanat, Hexamethylendiisocyanat, Dodecamethylendiisocyanat, 1,4-Diisocyanatocyclohexan, 1-Isocyanato-3,5,5-trimethyl-5-isocyanatomethylcyclohexan (IPDI), 2,2-Bis-(4-isocyanatocyclohexyl)-propan, Trimethylhexandiisocyanat, 1,4-Diisocyanatobenzol, 2,4-Diisocyanatotoluol, 2,6-Diisocyanatotoluol, 4,4'-Diisocyanato-diphenylmethan, 2,4'-Diisocyanato-diphenylmethan, p-Xylylendiisocyanat, Tetramethylxylylendiisocyanat (TMXDI), die Isomeren des Bis-(4-isocyanatocyclohexyl)methans (HMDI) wie das trans/trans-, das cis/cis- und das cis/trans-Isomere sowie aus diesen Verbindungen bestehende Gemische.

Die Herstellung der Polycarbodiimide aus Diisocyanaten ist an sich bekannt und wird beispielsweise in den US-A 2 840 589, US-A 2 941 966 und der EP-A 628541 beschrieben. Besonders schonend und frei von Nebenprodukten lassen sich Polycarbodiimide der allgemeinen Formel I auch durch eine Heterogenkatalyse gemäß der DE-A 2 504 400 und der DE-A 2 552 350 herstellen. Die Carbodiimidisierung von Diisocyanaten in Gegenwart sehr geringer Mengen an Phospholenoxid unter anschließender Blockierung des Katalysators mit Säurechloriden ist u.a. Gegenstand der DE-A 2 653 120.

Die erfindungsgemäßen wässrigen Dispersionen können auch aufgebaut sein aus Polycarbodiimiden, die im wesentlichen keine Carboxylgruppen tragen, wobei sich die Polycarbodiimide dadurch auszeichnen, daß es sich bei ihnen um solche der allgemeinen Formel (II) handelt,

$$R^d-(R^c-N=C=N-R^c)_n-R^d \qquad \text{(II)}$$

mit

n: einer Zahl von 1 bis 20

$R^c$: wie bei der allgemeinen Formel (I) definiert,

$R^d$: $-NH_2$

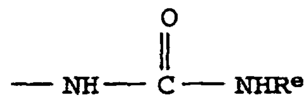

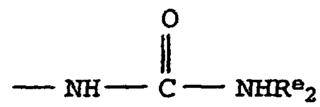

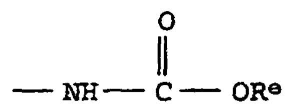

$-N=C=N-R^e$

und $R^e$ unabhängig voneinander $C_1$- bis $C_{20}$-Alkyl bzw. Alkenyl, $C_5$bis $C_{12}$-Cycloalkyl, $C_6$- bis $C_{20}$-Aryl oder $C_7$- bis $C_{20}$-Aralkyl bedeutet, wobei 1 bis 4 Wasserstoffatome der Reste $R^e$ durch gegenüber Carbodiimidgruppen inerten Substituenten substituiert sein können und wobei die Reste $R^e$ keine hydrophilen Gruppen enthalten sollen, welche eine Wasserdispergierbarkeit bewirken können. Unter der Bezeichnung "hydrophile Gruppen" sollen dabei solche Gruppen gemeint sein, die geeignet sind, in die wässrige Phase einzudringen und zu verbleiben.

Bevorzugt enthalten die erfindungsgemäßen wässrigen Dispersionen solche Polycarbodiimide, bei denen in der allgemeinen Formel.II $R^c$ für einen zweiwertigen, 2 bis 50 C-Atome, insbesondere 4 bis 20 C-Atome, aufweisenden Kohlenwasserstoffrest steht. Ganz besonders bevorzugt steht $R^c$ für einen Rest der Formel I'

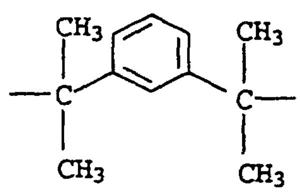 (I').

Bevorzugt eingesetzte Polycarbodiimide weisen als Reste $R^d$ insbesondere eine Urethanbrücke und als Reste $R^e$ insbesondere eine $C_1$-$C_{20}$-Alkyl- oder Alkenylbrücke auf.

Die Herstellung derartiger Polycarbodiimide der allgemeinen Formel II erfolgt üblicherweise durch Abspaltung von Kohlendioxid aus zwei Isocyanatgruppen, ausgehend von geeigneten Diisocyanaten, analog der Herstellung der Polycarbodiimide ausgehend von Polyisocyanaten der allgemeinen Formel I.

Es empfiehlt sich, in den wässrigen Dispersionen solche Polycarbodiimide der allgemeinen Formel II einzusetzen, die keine ionischen Gruppen oder keine Polyalkylenoxidgruppen mit mehr als 5 Ethylenoxid-Einheiten enthalten.

Die erfindungsgemäßen wässrigen Dispersionen sind vorzugsweise nach einem Verfahren zugänglich, bei dem zunächst aus einem geeigneten Diisocyanat durch Erhitzen auf Temperaturen von 50 bis 200°C, insbesondere von 100 bis 190°C und unter Abspaltung von Kohlendioxid ein Polycarbodiimid hergestellt wird und dieses dann auf Temperaturen von 20 bis 100°C, insbesondere von 60 bis 80°C bis zu einer dünnflüssigen Schmelze erhitzt wird. Die so erhaltene Schmelze wird anschließend mit Hilfe von geeigneten Emulgatoren oder Schutzkolloiden in Wasser emulgiert. Es können auch mit Wasser nichtmischbare Lösungsmittel verwendet werden, die nach der Emulgierung abdestilliert werden oder im Produkt verbleiben. Vorzugsweise kommt man ohne diese aus.

Bei der Emulgierung in Wasser entstehen emulgierte Monomertröpfchen mit einem Durchmesser von bis zu

50 µm; die Carbodiimide sind in diesen Monomertröpfchen gelöst bzw. dispergiert.

Die erfindungsgemäßen wässrigen Dispersionen zeichnen sich u.a. dadurch aus, dass die Polycarbodiimide in Form einer Miniemulsion in Wasser vorliegen können, was bedeutet, dass die Polycarbodiimide in emulgierten Teilchen eines Teilchendurchmessers von bis zu 5 µm, insbesondere von bis zu 1 µm in Wasser vorhanden sind. Zur Herstellung der Miniemulsion werden die Teilchen, in denen sich die Polycarbodiimide befinden, einer starken Scherung ausgesetzt, wodurch diese dispergieren. Eine solche starke Scherung kann u.a. durch Hochdruckhomogenisierung, durch Ultraschall oder aber durch Strahldispergatoren erreicht werden. Bevorzugt wird hierbei mit Ultraschall gearbeitet.

Aus der durch Erhitzen des Polycarbodiimids erhaltenen Schmelze wird bevorzugt eine Voremulsion in Wasser hergestellt, das eine wirksame Menge an Emulgatoren und/oder Schutzkolloiden enthält. Dann wird üblicherweise unter Einsatz von Ultraschall oder eines Hochdruckhomogenisators die Emulsion hergestellt. Dies erfolgt vorzugsweise bei Temperaturen von 20 bis 100°C, insbesondere von 60 bis 80°C und richtet sich nach der Viskosität der Schmelze und der Empfindlichkeit der Emulsion.

Die Polycarbodiimide werden mit Hilfe geeigneter Emulgatoren und/oder Schutzkolloiden in Wasser emulgiert. Dabei werden wie bei der Emulsionspolymerisation üblich u.a. ionische und/oder nichtionische Emulgatoren und/oder Schutzkolloide bzw. Stabilisatoren als grenzflächenaktive Substanzen verwendet.

Eine ausführliche Beschreibung geeigneter Schutzkolloide findet sich in Houben-Weyl, Methoden der organischen Chemie, Band XIV/1, Makromolekulare Stoffe, Georg-Thieme-Verlag, Stuttgart, 1961, S. 411 bis 420. Als Emulgatoren kommen sowohl anionische, kationische als auch nichtionische Emulgatoren in Betracht. Vorzugsweise werden als begleitende grenzflächenaktive Substanzen ausschließlich Emulgatoren eingesetzt, deren Molekulargewichte im Unterschied zu den Schutzkolloiden üblicherweise unter 2000 g/mol liegen. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Vorzugsweise werden anionische und nichtionische Emulgatoren als grenzflächenaktive Substanzen verwendet. Gebräuchliche begleitende Emulgatoren sind z.B. ethoxylierte Fettalkohole (EO-Grad: 3 bis 50, Alkylrest; $C_8$- bis $C_{36}$), ethoxylierte Mono-, Di- und Tri-Alkylphenole (EO-Grad: 3 bis 50, Alkylrest: $C_4$- bis $C_9$), Alkalimetallsalze von Dialkylestern der Sulfobernsteinsäure sowie Alkali- und Ammoniumsalze von Alkylsulfaten (Alkylrest: $C_8$- bis $C_{12}$), von ethoxylierten Alkanolen (EO-Grad: 4 bis 30, Alkylrest: $C_{12}$- bis $C_{18}$), von ethoxylierten Alkylphenolen (EO-Grad: 3 bis 50, Alkylrest: $C_4$ bis $C_9$), von Alkylsulfonsäuren (Alkylrest: $C_{12}$- bis $C_{18}$) und von Alkylarylsulfonsäuren (Alkylrest: $C_9$- bis $C_{18}$).

Geeignete Emulgatoren finden sich auch in Houben-Weyl, Methoden der organischen Chemie, Band 14/1, Makromolekulare Stoffe, Georg Thieme Verlag, Stuttgart, 1961, Seiten 192 bis 208.

Handelsnamen von geeigneten Emulgatoren sind z.B. Dowfax® 2 A1, Emulan® NP 50, Dextrol® OC 50, Emulgator 825, Emulgator 825 S, Emulan® OG, Texapon® NSO, Nekanil® 904 S, Lumiten® I-RA, LumitenE 3065 oder Steinapol® NLS.

Die grenzflächenaktive Substanz wird üblicherweise in Mengen von 0,1 bis 10 Gew.-%, bezogen auf die Ölphase verwendet.

Bei der Erwärmung des Polycarbodiimids bis zur dünnflüssigen Schmelze kann es sich empfehlen, diese mit einem zusätzlichen hydrophoben, d.h. wasserunlöslichen Material zu versetzen, welches durch eine Wasserlöslichkeit von < $10^{-5}$ g/l, bevorzugt von < $10^{-7}$ g/l gekennzeichnet ist. Das hydrophobe Material kann dabei in einer Menge von 0,01 bis 10 Gew.-%, insbesondere von 0,05 bis 0,5 Gew.-% hinzugesetzt werden. Beispiele für derartige hydrophobe Materialien sind u.a. Kohlenwasserstoffe wie Hexadecan, halogenierte Kohlenwasserstoffe beispielsweise Fluorkohlenwasserstoffe, Silane, Organosilane, Siloxane, langkettige Ester, Öle wie z.B. Pflanzenöl, hydrophobe Farbstoffmoleküle, verkappte Isocyanate sowie oligomere Polymerisation-, Polykondensation- und Polyadditionsprodukte.

Im Falle der erfindungsgemäßen wässrigen Dispersion sind geeignete hydrophobe Materialien auch höhermolekulare Vertreter aus der Oligomerenverteilung der zu emulgierenden Substanz, so daß auf einen entsprechenden Fremdstoff verzichtet werden kann. Ebenfalls geeignete hydrophobe Materialien sind Strukturen der allgemeinen Formeln I oder II, wobei die Reste $R^c$ und/oder $R^e$ jeweils für ein langkettiges Alkan stehen, insbesondere für ein Alkan mit 10 bis 20 C-Atomen.

Weiterhin kann es sich empfehlen, das aus dem Diisocyanat entstehende Polycarbodiimid nach seiner Herstellung noch mit einem Alkohol zu einem Carbodiimid-Gruppen enthaltenen Polyurethan umzusetzen. Dies kann bei Temperaturen von 20 bis 120°C, insbesondere von 60 bis 80°C erfolgen. Auf diese Weise entsteht ein sogenanntes Polycarbodiimidurethan.

Hierfür geeignete Alkohole sind zum einen niedermolekulare Monoalkohole oder auch Diole mit einem Molekulargewicht von etwa 32 bis 500, insbesondere von 62 bis 300 g/mol. Vorzugsweise verwendet man dabei kurzkettige Monoalkohole also verzweigte oder unverzweigte Monoalkohole mit 6 bis 30 C-Atomen wie 1-Hexanol, 2-Ethylhexanol, oder aber Dodecanol, Behenol sowie Stearylakohol oder oleylalkohol.

Darüber hinaus können die erhaltenen Polycarbodiimide auch mit höhermolekularen Alkoholen mit einem Molekulargewicht von etwa 500 bis 5000, vorzugsweise mit einem Molekulargewicht von etwa 1000 bis 3000 g/mol

umgesetzt werden. Hierfür eignen sich u.a. Polyesterpolyole, Polyetherdiole oder aber Polyhydroxyolefine.

Die Umsetzung des Polycarbodiimids mit den Alkoholen kann mit Hilfe von organischen Metallverbindungen des Zinns, beispielsweise mit Hilfe von Dibutylzinndilaurat, katalysiert werden.

Die erfindungsgemäßen wässrigen Dispersionen reagieren gut mit Carbonsäure-Gruppen und eignen sich so als Vernetzersystem von carboxylathaltigen Polymeren. Die wässrigen Dispersionen sind dabei auch über Monate hinweg haltbar, also lagerstabil und können mit wässrigen carboxylhaltigen Polymeren zu wasserfesten, vernetzten Filmen verarbeitet werden. Sie sind ohne großen Aufwand leicht herstellbar.

Die erfindungsgemäßen wässrigen Dispersionen eignen sich insbesondere als Bestandteil von Bindemitteln für Beschichtungsmittel oder Imprägnierungsmittel, z.B. für Klebstoffe, Lacke, Anstriche, Papierstreichmassen oder als Bindemittel für Faservliese, d.h. in allen Fällen, in denen eine Vernetzung und Erhöhung der inneren Festigkeit (Kohäsion) gewünscht ist.

Je nach Verwendungszweck kann die wässrige Dispersion Zusatzstoffe wie Verdicker, Verlaufshilfsmittel, Pigmente oder Füllstoffe, Fungizide etc. enthalten.

Bei der Verwendung als Klebstoff können die erfindungsgemäßen wässrigen Dispersionen neben obengenannten Zusatzstoffen noch spezielle, in der Klebstofftechnologie übliche Hilfs- und Zusatzmittel enthalten. Hierzu gehören beispielsweise Verdickungsmittel, Weichmacher oder auch klebrigmachende Harze wie z.B. Naturharze oder modifizierte Harze wie Kolophoniumester oder synthetische Harze wie Phthalatharze.

Polymer-Dispersionen, welche als Klebstoff Verwendung finden, enthalten besonders bevorzugt Alkyl(meth) acrylate als Hauptmonomere im Polymer. Bevorzugte Anwendungen im Klebstoffgebiet sind auch Kaschierklebstoffe, z.B. für die Verbund- und Glanzfolienkaschierung (Verklebung von transparenten Folien mit Papier oder Karton). Die erfindungsgemäßen wässrigen Dispersionen können nach üblichen Verfahren auf die zu beschichtenden oder zu imprägnierenden Substrate aufgebracht werden.

Die erfindungsgemäßen wässrigen Dispersionen lassen sich insbesondere mit Gegenständen aus Holz, Metall, Textil, Leder oder Kunststoffe verkleben, imprägnieren oder beschichten.

Beispiele

I. Herstellung eines Diisocyanatocarbodiimids aus TMXDI

750 Gew.-Teile (3,1 mol) 1,3-Bis-(1-methyl-1-isocyanatoethyl)-benzol (TMXDI) mit einem NCO-Gehalt von 34,4 Gew.-% wurden in Gegenwart von 1,5 Gew.-Teilen, bezogen auf das Isocyanat, 1-Methyl-2-phospholen-1-oxid auf 180°C erhitzt und bei dieser Temperatur unter mäßiger Kohlendioxid-Entwicklung kondensiert. Nach Erreichen eines NCO-Gehaltes der Reaktionsmischung von ca. 11 Gew.-% wurden Reste von nicht umgesetztem TMXDI bei einer Temperatur von 180°C unter vermindertem Druck abdestilliert.

Man erhielt eine Mischung von Carbodiimiden mit einem NCO-Gehalt von 8,0 Gew.-%, die einen Gehalt an -N=C=N-Gruppen von ca. 15 Gew.-%, einen Schmelzpunkt < 30°C und eine Jodfarbzahl von 5 bis 7 gemessen nach DIN 6162 aufwies.

II. Herstellung von Polycarbodiimidurethanen

Beispiel 1

Polycarbodiimidurethan mit Oleylalkohol

In einem Rührkolben wurden 300 g TMXDI-CDI, d.h. das Polycarbodiimid aus I, 180 g Oleylalkohol und 0,1 g Dibutylzinndilaurat (DBTL) bei 100°C 240 min lang gerührt. Der NCO-Gehalt des erhaltenen viskosen Öls wurde titrimetrisch zu 0,03 Gew.-% bestimmt.

Beispiel 2

Polycarbodiimidurethan mit Stearylalkohol

In einem Rührkolben wurden 519 g TMXDI-CDI, d.h. das Polycarbodiimid aus I, 257 g Stearylalkohol und 0,1 g DBTL bei 100°C 240 min lang gerührt. Der NCO-Gehalt des erhaltenen viskosen Öls wurde titrimetrisch zu 0,01 Gew.-% bestimmt.

Beispiel 3

Polycarbodiimidurethan mit Methyldiglykol

In einem Rührkolben wurden 800 g TMXDI-CDI, d.h. das Polycarbodiimid aus I, 182 g Methyldiglykol und 0,1 g DBTL bei 140°C 120 min lang gerührt. Der NCO-Gehalt des erhaltenen viskosen Öls wurde titrimetrisch zu 0,01 Gew.-% bestimmt.

Beispiel 4

Polycarbodiimidurethan mit Ethylhexanol

In einem Rührkolben wurden 300 g TMXDI-CDI, d.h. das Polycarbodiimid aus I, 74,4 g 2-Ethylhexanol und 0,1 g DBTL bei 100°C 180 min lang gerührt. Der NCO-Gehalt des erhaltenen viskosen Öls wurde titrimetrisch zu 0,05 Gew.-% bestimmt.

III.Herstellung der Miniemulsion (wässrige Dispersion)

Miniemulsion 1a

50 g des Polycarbodiimidurethans aus dem Beispiel 1 wurden auf 70°C erwärmt und mit 200 g heißem VE-Wasser gemischt, das 3 g Steinapol NLS 15 %ig (Na-Laurylsulfat) als Emulgator enthielt. Die Mischung wurde mit einem Magnetrührstäbchen bei 70°C 5 Minuten im Wasserbad gerührt und danach im heißen Wasserbad mit einem Ultraschallstab (Branson Sonifier) 10 Minuten lang beschallt. Nach Filtration über ein 40 μm Filter wurde die Teilchengröße zu 300 nm bestimmt.

Miniemulsion 1b

100 g des Polycarbodiimidurethans aus Beispiel 1 wurden auf 70°C erwärmt, mit 2,5 g Oleylalkohol gemischt und mit 400 g heißem VE-Wasser gemischt, das 6 g Steinapol NLS 15 %ig als Emulgator enthält. Die Mischung wurde mit einem Ultraturrax (IKA T25, 24000 U/min) bei 70°C 3 min im Wasserbad homogenisiert und über ein 125 m Druckfilter gereinigt. Danach wurde die Voremulsion 3 mal ohne Kühlung durch einen Hochdruckhomogenisator (Firma Microfluidics) gefahren. Nach Filtration über ein 40 μ Filter wurde die Teilchengröße zu 316 nm bestimmt.

Miniemulsion 2

50 g des Polycarbodiimidurethans aus Beispiel 2 wurden auf 70°C erwärmt, mit 1,25 g Hexadecan gemischt und bei 70°C 1 h gerührt. Dann wurde 200 g heißes VE-Wasser zugegeben, das 3 g Steinapol NLS 15 %ig als Emulgator enthält. Die Mischung wurde mit einem Magnetrührstäbchen bei 70°C 5 min im Wasserbad gerührt und danach im heißen Wasserbad mit einer Ultraschallstab (Branson Sonifier) 10 min beschallt. Nach Filtration über ein 40 μ Filter wurde die Teilchengröße zu 321 nm bestimmt.

Miniemulsion 3

50 g des Polycarbodiimidurethans aus Beispiel 3 wurden auf 70°C erwärmt, mit 2,5 g des Urethans aus Beispiel 1 gemischt; dann wurde 200 g heißes VE-Wasser zugegeben, das 3 g Steinapol NLS 15 %ig als Emulgator enthielt. Die Mischung wurde mit einem Magnetrührstäbchen bei 70°C 5 min im Wasserbad gerührt und danach im heißen Wasserbad mit einer Ultraschallstab (Branson Sonifier) 10 min beschallt. Nach Filtration über ein 40 μ Filter wurde die Teilchengröße zu 350 nm bestimmt.

Miniemulsion 4

50 g des Polycarbodiimidurethans aus Beispiel 4 wurden auf 70°C erwärmt und mit 1,25 g Hexadecan versetzt und 1 h bei 70°C gerührt. Danach wurde mit 200 g VE-Wasser gemischt, das 3 g Steinapol NLS 15 %ig als Emulgator enthielt. Die Mischung wurde mit einem Magnetrührstäbchen 5 min gerührt und danach ohne Kühlung mit einem Ultraschallstab (Branson Sonifier) 10 min beschallt. Das Lösungsmittel wurde abrotiert. Nach Filtration über ein 40 μ Filter wurde die Teilchengröße zu 386,9 nm bestimmt.

Miniemulsion 5

100 g eines Polycarbodiimids der Formel I mit n = 4, wobei $R^c$ für einen Rest der Formel I' steht, wurden mit 2,5 g Hexadecan als hydrophobes Material und 400 g VE-Wasser gemischt, welches 6 g Steinapol NLS 15 %ig als Emulgator enthielt. Die Mischung wurde mit einem Ultraturrax (IKA T 25, 24000 Umdrehungen/min) bei Raumtemperatur 3 Minuten lang voremulgiert und anschließend über ein 125 µm Druckfilter gereinigt. Danach wurde die Voremulsion 3 mal unter Wasserkühlung durch einen Hochdruckhomogenisator (Firma Microfluidics) gefahren. Nach Filtration über ein 40 µm Filter wurde die Teilchengröße zu 368 nm bestimmt.

IV. Vernetzungsversuche

Eine carboxylathaltige Polyurethandispersion (Luphen® D259U der BASF Aktiengesellschaft) wurde mit steigenden Mengen der Emulsion la versetzt und anschließend der K-Wert nach Fikentscher in DMF gemessen. Danach wurde ein Film gegossen, 3 Tage lang bei Raumtemperatur getrocknet und dann die Messung wiederholt. Der K-Wert der Emulsion bzw. des Films ist ein Maß für die Vernetzeraktivität.

In der nachfolgenden Tabelle sind die Ergebnisse der K-Wert Bestimmungen für verschieden hohe Anteile der einzelnen Miniemulsionen (Emulsionen) wiedergegeben.

Tabelle

| Polyurethan-Dispersion | K-Wert der Dispersion | K-Wert Film |
|---|---|---|
| 1 % f/f Emulsion la | 45 | ungelöst |
| 5 % f/f Emulsion la | 43 | ungelöst |
| 10 % f/f Emulsion 1a | 43 | ungelöst. |
| 5 % f/f Emulsion 3 | 49 | ungelöst |
| 5 % f/f Emulsion 5 | 52 | ungelöst |

**Patentansprüche**

1. Wässrige Dispersionen, aufgebaut aus Polycarbodiimiden, die im wesentlichen keine Carboxylgruppen tragen, wobei sich die Polycarbodiimide **dadurch** auszeichnen, daß diese

I erhalten werden aus Polyisocyanaten der allgemeinen Formel I

$$OCN\text{-}(R^c\text{-}N{=}C{=}N)_n\text{-}R^c\text{-}NCO \qquad (I)$$

in der $R^c$ für einen zweiwertigen, ggf. Harnstoff-, Urethan-, Ester- und/oder Ethergruppen aufweisenden Kohlenwasserstoffrest, wie er durch Entfernung der Isocyanatgruppen aus einem einfachen organischen Isocyanat oder einem Urethangruppen und ggf. Ether- oder Estergruppen aufweisenden Präpolymer, das endständige Isocyanatgruppen trägt, erhalten wird, wobei bei Vorliegen von mehreren Resten $R^c$ im gleichen Molekül gleichzeitig auch unterschiedliche, der genannten Definition entsprechende Reste $R^c$ vorliegen können und n für von 1 bis 20 steht,

II oder daß es sich bei den Polycarbodiimiden um solche der allgemeinen Formel (II) handelt

$$R^d\text{-}(R^c\text{-}N{=}C{=}N\text{-}R^c)_n\text{-}R^d \qquad (II)$$

mit

n: einer Zahl von 1 bis 20

$R^c$: wie bei der allgemeinen Formel (I) definiert,

$R^d$:

-$NH_2$

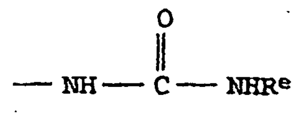

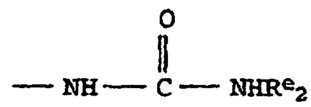

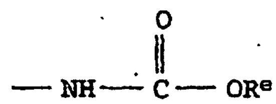

-N=C=N-$R^e$

und $R^e$ unabhängig voneinander $C_1$- bis $C_{20}$-Alkyl bzw. Alkenyl, $C_5$- bis $C_{12}$-Cycloalkyl, $C_6$- bis $C_{20}$-Aryl oder $C_7$- bis $C_{20}$-Aralkyl bedeutet, wobei 1 bis 4 Wasserstoffatome der Rest $R^e$ durch gegenüber Carbodiimidgruppen inerten Substituenten substituiert sein können und wobei die Rest $R^e$ keine hydrophilen Gruppen enthalten sollen, welche eine Wasserdispergierbarkeit bewirken können
und erhältlich sind durch ein Verfahren, **dadurch gekennzeichnet, daß** zunächst aus einem geeigneten Diisocyanat durch Erhitzen unter Abspaltung von Kohlendioxid ein Polycarbodiimid hergestellt wird, dieses anschließend bis zu einer dünnflüssigen Schmelze erhitzt wird und danach mit Hilfe von Emulgatoren in Wasser emulgiert wird.

**2.** Wässrige Dispersionen nach Anspruch 1, wobei in den beiden allgemeinen Formeln I und II n jeweils für eine Zahl von 2 bis 10 steht.

**3.** Wässrige Dispersionen nach einem der Ansprüche 1 oder 2, wobei in der allgemeinen Formel I der Rest $R^c$ für einen zweiwertigen, 2 bis 50 C-Atome aufweisenden Kohlenwasserstoffrest steht.

**4.** Wässrige Dispersionen nach Anspruch 3, wobei in der allgemeinen Formel I der Rest $R^c$ für eine Gruppe der Formel (I')

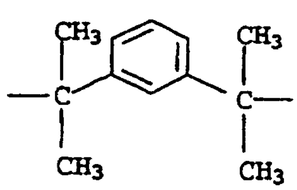

(I')

steht.

**5.** Wässrige Dispersionen nach einem der Ansprüche 1 oder 2, wobei in der allgemeinen Formel (II) der Rest $R^c$ für einen zweiwertigen, 2 bis 50 C-Atome aufweisenden Kohlenwasserstoffrest steht.

**6.** Wässrige Dispersionen nach einem der Ansprüche 1 bis 5, wobei die Polycarbodiimide der allgemeinen Formel (II) keine ionischen Gruppen oder keine Polyalkylenoxidgruppen mit mehr als 5 Ethylenoxid-Einheiten enthalten.

**7.** Wässrige Dispersionen nach einem der Ansprüche 1 bis 6, wobei die Polycarbodiimide in Form einer Miniemulsion in Wasser vorliegen.

**8.** Wässrige Dispersionen nach Anspruch 7, wobei die Miniemulsion sich **dadurch** auszeichnet, daß die Polycarbodiimide in emulgierten Teilchen eines Teilchendurchmessers von bis zu 1 µm in Wasser vorliegen.

**9.** Wäßrige Dispersion nach einem der Ansprüche 1 bis 8, **dadurch gekennzeichnet, daß** das Emulgieren des Polycarbodiimids in Wasser mit Hilfe einer Ultraschallbehandlung erfolgt.

**10.** Wäßrige Dispersion nach einem der Ansprüche 1 bis 9, **dadurch gekennzeichnet, daß** das aus dem Diisocyanat entstehende Polycarbodiimid nach seiner Herstellung mit einem Alkohol zu einem Carbodiimid-Gruppen enthaltenden Polyurethan umgesetzt wird.

**11.** Wässrige Dispersionen nach einem der Ansprüche 1 bis 10, wobei die Dispersionen Carbodiimid-Gruppen enthaltende Polyurethane aufweisen, welche durch Umsetzung der Polycarbodiimide mit Alkoholen erhältlich sind.

**12.** Verwendung der wässrigen Dispersion gemäß einem der Ansprüche 1 bis 11 als Bestandteil von Bindemitteln für Beschichtungsmittel oder Imprägnierungsmittel.

**13.** Verwendung der wässrigen Dispersion gemäß einem der Ansprüche 1. bis 11 als Bestandteil von Bindemitteln in Klebstoffen, Lacken, Anstrichen, Papierstreichmassen oder in Faservliesen.

## Claims

**1.** An aqueous dispersion composed of polycarbodiimides which carry substantially no carboxyl groups and

I are obtained from polyisocyanates of the formula I

$$OCN\text{-}(R^c\text{-}N{=}C{=}N)_n\text{-}R^c\text{-}NCO \qquad (I)$$

where $R^c$ is a divalent hydrocarbon radical with or without urea, urethane, ester and/or ether groups, as is obtained by removal of the isocyanate groups from a simple organic isocyanate or from a prepolymer which contains urethane groups and, if desired, ether or ester groups and which carries terminal isocyanate groups, two or more radicals $R^c$ present in the same molecule having identical or different definitions, and n being from 1 to 20,

II or are of the formula (II)

$$R^d\text{-}(R^c\text{-}N{=}C{=}N\text{-}R^c)_n\text{-}R^d \qquad (II)$$

where

n is a number from 1 to 20,

$R^c$ is as defined for the formula (I),

$R^d$ is

$$-NH_2$$

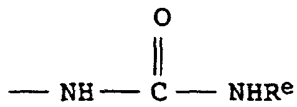

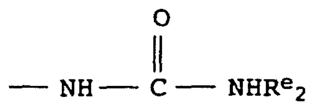

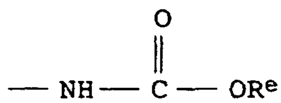

$$-N=C=N-R^e$$

and $R^e$ independently at each occurrence is $C_1$ to $C_{20}$ alkyl or alkenyl, $C_5$ to $C_{12}$ cycloalkyl, $C_6$ to $C_{20}$ aryl or $C_7$ to $C_{20}$ aralkyl, in which 1 to 4 hydrogen atoms of the radical $R^e$ may be substituted by substituents that are inert toward carbodiimide groups and in which the radical $R^e$ ought not to comprise any hydrophilic groups capable of producing dispersibility in water,
and obtainable by a process which comprises first preparing a polycarbodiimide by heating an appropriate diisocyanate with elimination of carbon dioxide, subsequently heating said polycarbodiimide to form a highly mobile melt, and then emulsifying said melt in water with the aid of emulsifiers.

**2.** A dispersion as claimed in claim 1, each n in the two formulae I and II being a number from 2 to 10.

**3.** A dispersion as claimed in either of claims 1 and 2, wherein the radical $R^c$ in the formula I is a divalent hydrocarbon radical containing from 2 to 50 carbon atoms.

**4.** A dispersion as claimed in claim 3, wherein the radical $R^c$ in the formula I is a group of the formula (I')

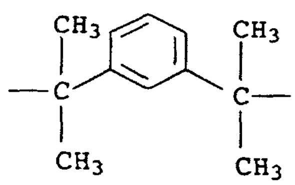

(I')

**5.** A dispersion as claimed in either of claims 1 and 2, wherein the radical $R^c$ in the formula (II) is a divalent hydrocarbon radical containing from 2 to 50 carbon atoms.

**6.** A dispersion as claimed in any of claims 1 to 5, wherein the polycarbodiimides of the formula (II) comprise no ionic groups or no polyalkylene oxide groups having more than 5 ethylene oxide units.

**7.** A dispersion as claimed in any of claims 1 to 6, wherein the polycarbodiimides are in the form of a miniemulsion in water.

**8.** A dispersion as claimed in claim 7, wherein said emulsion comprises said polycarbodiimides in emulsified particles with a diameter of up to 1 μm in water.

**9.** A dispersion as claimed in any of claims 1 to 8, wherein said emulsifying takes place with the aid of ultrasound.

**10.** A dispersion as claimed in any of claims 1 to 9, wherein the polycarbodiimide prepared from the diisocyanate is reacted with an alcohol to give a polyurethane comprising carbodiimide groups.

**11.** A dispersion as claimed in any of claims 1 to 10, comprising polyurethanes comprising carbodiimide groups and obtainable by reacting the polycarbodiimides with alcohols.

**12.** The use of a dispersion as claimed in any of claims 1 to 11 as a constituent of binders for coating compositions or impregnating compositions.

**13.** The use of an aqueous dispersion as claimed in any of claims 1 to 11 as a constituent of binders in adhesives, varnishes, paints, papercoating slips or fiber nonwovens.

**Revendications**

**1.** Dispersions aqueuses constituées de polycarbodiimides, qui ne portent essentiellement pas de groupes carboxyle, les polycarbodiimides se distinguant

I par le fait que ceux-ci sont obtenus à partir de polyisocyanates de la formule générale I :

$$OCN\text{-} (R^c\text{-}N{=}C{=}N)_n\text{-}R^c\text{-}NCO \quad (I)$$

dans laquelle $R^c$ représente un radical d'hydrocarbure bivalent, présentant éventuellement des groupes urée, uréthanne, ester et/ou éther, comme obtenu par élimination des groupes isocyanate à partir d'un isocyanate organique simple ou d'un prépolymère qui présente des groupes uréthanne et éventuellement des groupes éther ou ester et qui porte des groupes isocyanate terminaux, $R^c$ pouvant, en présence de plusieurs radicaux $R^c$ dans la même molécule, se présenter aussi simultanément sous la forme de radicaux différents, correspondant à la définition précitée, et n représente 1 à 20,
II ou par le fait qu'il s'agit, pour ce qui concerne les polycarbodiimides, de ceux de la formule générale (II) :

$$R^d\text{-}(R^c\text{-}N{=}C{=}N\text{-}R^c)_n\text{-}R^d \quad (II)$$

où
n est un nombre de 1 à 20,
$R^c$ est tel que défini pour la formule générale (I),
$R^d$ représente

$-NH_2$

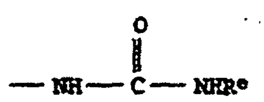

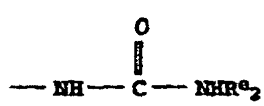

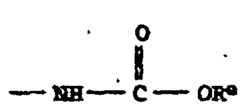

$-N=C=N-R^e$

et $R^e$ représente, indépendamment, un groupe alkyle ou alcényle en $C_1$-$C_{20}$, cycloalkyle en $C_5$-$C_{12}$, aryle en $C_6$-$C_{20}$ ou aralkyle en $C_7$-$C_{20}$, 1 à 4 atomes d'hydrogène du radical $R^e$ pouvant être substitués par des substituants inertes vis-à-vis des groupes carbodiimide, le radical $R^e$ ne pouvant contenir aucun groupe hydrophile qui puisse provoquer une capacité de dispersion dans l'eau,
et qui peuvent être obtenues par un procédé, **caractérisé en ce que**, tout d'abord, à partir d'un diisocyanate approprié, on prépare, par chauffage avec séparation de dioxyde de carbone, un polycarbodiimide, on chauffe ensuite ce dernier jusqu'à formation d'une masse fondue fluide et on émulsionne ensuite dans de l'eau à l'aide d'agents émulsionnants.

2. Dispersions aqueuses suivant la revendication 1, dans lesquelles n représente chaque fois un nombre de 2 à 10 dans les deux formules générales I et II.

3. Dispersions aqueuses suivant l'une des revendications 1 et 2, dans lesquelles le radical $R^c$ dans la formule générale I représente un radical d'hydrocarbure bivalent comportant 2 à 50 atomes de C.

4. Dispersions aqueuses suivant la revendication 3, dans lesquelles le radical $R^c$ dans la formule générale I représente un groupe de la formule (I') :

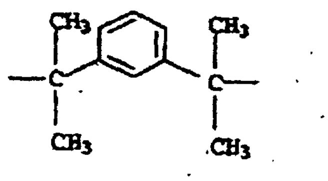
(I')

5. Dispersions aqueuses suivant une des revendications 1 et 2, dans lesquelles le radical $R^c$ dans la formule générale (II) représente un radical d'hydrocarbure bivalent qui comporte 2 à 50 atomes de C.

6. Dispersions aqueuses suivant l'une des revendications 1 à 5, dans lesquelles les polycarbodiimides de la formule générale (II) ne contiennent aucun groupe ionique ou aucun groupe d'oxyde de polyalkylène présentant plus de 5 unités d'oxyde d'éthylène.

7. Dispersions aqueuses suivant l'une des revendications 1 à 6, dans lesquelles les polycarbodiimides se présentent sous la forme d'une miniémulsion dans l'eau.

8. Dispersions aqueuses suivant la revendication 7, dans lesquelles la miniémulsion se distingue par le fait que les polycarbodiimides se présentent en particules émulsionnées d'un diamètre allant jusqu'à 1 $\mu$m dans l'eau.

9. Dispersion aqueuse suivant l'une des revendications 1 à 8, **caractérisée en ce que** l'émulsionnement du polycarbodiimide a lieu dans l'eau à l'aide d'un traitement aux ultrasons.

10. Dispersion aqueuse suivant l'une des revendications 1 à 9, **caractérisée en ce que** le polycarbodiimide obtenu à partir du diisocyanate est amené à réagir après sa préparation avec un alcool pour former un polyuréthanne contenant des groupes carbodiimide.

11. Dispersions aqueuses suivant l'une des revendications 1 à 10, dans lesquelles les dispersions présentent des polyuréthannes qui contiennent des groupes carbodiimide et qui peuvent être obtenus par réaction des polycarbodiimides avec des alcools.

12. Utilisation des dispersions aqueuses suivant l'une des revendications 1 à 11, comme composant de liants pour des produits de revêtement ou d'imprégnation.

13. Utilisation de la dispersion aqueuse suivant l'une des revendications 1 à 11, comme composant de liants dans des colles, des vernis, des peintures, des masses d'enduction de papier ou des non-tissés.